# FASCICULE DE BREVET EUROPEEN

(11) **EP 3 221 183 B1**
(45) Date de publication et mention de la délivrance du brevet: **25.03.2020**
(21) Numéro de dépôt: 15817938.2
(22) Date de dépôt: 16.11.2015
(51) Int. Cl.: B60N 2/58, B60N 2/60, B60R 22/02

(54) **BANQUETTE AUTOMOBILE, PORTION DE COIFFE DE BANQUETTE**
FAHRZEUGSITZBANK, TEIL EINES SITZBANKBEZUGS
VEHICLE BENCH, PORTION OF A BENCH COVER

(30) Priorité: 19.11.2014 FR 1461166
(43) Date de publication de la demande: 27.09.2017
(73) Titulaire: Renault S.A.S., 92100 Boulogne-Billancourt (FR)
(72) Inventeur: DUVALLET, Patrick, 78280 Guyancourt (FR); ANGELINI, Bruno, 78120 Rambouillet (FR); JOUIN, Eric, 91120 Palaiseau (FR); JUSSIEN, Jean Paul, 92240 Malakoff (FR)
(86) Numéro de dépôt international: PCT/FR2015/053087
(87) Numéro de publication internationale: WO 2016/079405

(56) Documents cités:
- EP-A2- 2 075 156
- DE-A1- 19 904 324
- FR-A1- 2 754 505
- JP-A- 2011 168 074
- US-A1- 2003 173 767

## Description

La présente invention concerne une banquette de siège automobile, un ensemble de banquette, une coiffe de banquette et véhicule équipé d'une telle banquette. En particulier, elle concerne une banquette avec une coiffe dans le domaine des garnissages traditionnels et dans le domaine des sièges déhoussables, c'est à dire avec coiffes que l'on peut changer selon le souhait de l'utilisateur.

En effet, classiquement, un siège de voiture comporte une armature, une matelassure généralement en mousse de polyuréthanne, et un revêtement d'aspect recouvrant la matelassure appelé coiffe. Ce revêtement peut être réalisé en différents matériaux d'aspect par exemple tissu, cuir etc. La coiffe est habituellement fixée sur la matelassure et sur la structure, par garnissage traditionnel, grâce à des moyens de rappels et de fixation, de manière connue en soi. Des exemples de sièges de l'état de la technique sont divulgués par JP2011168074 et EP2075156.

L'invention concerne à la fois le domaine du garnissage traditionnel et à la fois le domaine du garnissage avec coiffe amovible, pour le cas particulier des banquettes de siège.

Pour les banquettes de sièges, à l'arrière du véhicule, la ceinture de sécurité pour les deux places latérales situées aux extrémités, est généralement fixée à l'intérieur du coté arrière de caisse du véhicule. Un passage de sangle est prévu en position haute de l'intérieur du coté arrière de caisse, et la sangle retombe à partir de ce passage de sangle à l'avant sur les ébénisteries de pied arrière inférieures de caisse, plus précisément sur les habillages intérieurs du pied arrière de caisse en plastique, présents latéralement, de chaque côté de la banquette.

Cette sangle est munie d'un pêne. Or, lorsque le pêne est inutilisé en l'absence d'occupant sur la place latérale de banquette arrière, le contact du pêne sur les habillages latéraux à l'intérieur véhicule est générateur de vibrations ou de bruit lorsque la voiture roule. On cherche à réduire, voire supprimer ce bruit.

De plus, on cherche une solution pérenne, non agressive pour l'utilisateur et utilisable à la fois en garnissage traditionnel et aussi pour le cas spécifique du siège avec portion de coiffe amovible, afin de s'affranchir d'un environnement intérieur de véhicule différent suivant le type de garnissage de siège, ce qui entrainerait une diversité véhicule supplémentaire, nécessairement couteuse.

De plus, les coiffes amovibles doivent pouvoir subir l'entretien de lavage, et la solution doit être compatible avec cet entretien, c'est-à-dire ne pas être détériorée par exemple par un entretien de lavage classique en machine à laver le linge.

Dans ce but, la présente invention propose une banquette de siège de véhicule automobile comprenant une coiffe de siège recouvrant une matelassure de siège disposée sur une structure de banquette de siège automobile à laquelle la coiffe de siège est maintenue, caractérisée en ce que la coiffe comprend une boucle de maintien solidarisée à la coiffe par couture, ladite boucle de maintien étant destinée au maintien d'un pêne d'une ceinture de sécurité à l'intérieur de ladite boucle afin de réduire les frottements de ce dernier avec l'environnement intérieur véhicule.

La solidarisation par couture permet une fixation simple de la boucle de maintien sur le garnissage, avant le montage de ce dernier sur la structure de siège. De plus, une solidarisation par couture permet avantageusement une identité de solution pour le cas des sièges d'un même type de véhicule entre un siège avec ou sans coiffes amovibles, ce qui permet de ne pas avoir de diversité supplémentaire dans l'environnement véhicule pour deux types de garnissages différents.

Dans des formes de réalisation préférées de l'invention, on a en outre recours à l'une et/ou à l'autre des dispositions suivantes prises seules ou en combinaison:
- Dans le cas où la coiffe comprend deux parties de coiffe, une portion latérale et une portion centrale amovible de coiffe réunies par une fermeture à glissière, la portion centrale amovible de coiffe comprend ladite boucle de maintien solidarisée à la coiffe par couture.

Avantageusement, la présente invention propose une solution de maintien ingénieuse et avantageuse du brin de ceinture et une solution à la fois compatible en environnement de garnissage traditionnel et en environnement de garnissage avec coiffe amovible, ce que l'on souhaite. Il n'est ainsi pas nécessaire de modifier l'environnement de l'intérieur véhicule en fonction du type de garnissage de siège choisi dans le véhicule.
- La boucle de maintien est formée par une bande repliée sur elle-même, dont les extrémités sont solidarisées à la coiffe par une première couture sensiblement transversale à la bande traversant au moins les deux extrémités de bande et la coiffe.
- la boucle de maintien est fixée à la coiffe par une deuxième couture, distincte de la première couture, ladite deuxième couture traversant au moins les deux extrémités de bande et la coiffe, et définissant un espace de bande entre la première couture et la seconde couture, ledit espace de bande longeant la coiffe.
- la boucle de maintien comprend une couture sensiblement transversale traversant uniquement les deux portions de bande, ladite couture étant destinée à former la boucle de réception de la partie métallique du pêne.
- la boucle de maintien est réalisée en élastomère recouvrant un insert.

Avantageusement, une matière à base d'élastomère est adaptée pour procurer la souplesse nécessaire pour la boucle, permettant l'effacement de celle-ci lorsque par exemple le siège est occupé. L'insert intérieur permet le renfort de la bande, nécessaire pour maintenir la partie métallique du pêne.

L'invention concerne aussi un ensemble de banquette d'un véhicule automobile comprenant une banquette selon l'une quelconque des revendications précédentes, un coté de caisse comprenant un enrouleur de ceinture de sécurité et un guide sangle à travers lequel traverse un brin de sangle de la ceinture émanant de l'enrouleur de la ceinture de sécurité, la ceinture comprenant un pêne de ceinture muni d'une partie métallique d'accrochage, caractérisé en ce que la partie métallique d'accrochage du pêne de ceinture est positionnée, au moins en partie, à l'intérieur de la boucle de maintien.

L'invention concerne aussi un véhicule muni d'un ensemble de banquette selon les caractéristiques précédentes.

Enfin, l'invention a trait aussi à une portion de coiffe amovible de banquette destinée à une banquette de siège automobile munie d'une coiffe comprenant deux parties de coiffe, une portion latérale et une portion centrale amovible de coiffe réunies par une fermeture à glissière, ladite portion de coiffe amovible comprenant une boucle de maintien solidarisée par couture à la portion de coiffe amovible.

D'autres caractéristiques et avantages de l'invention apparaîtront au cours de la description suivante de plusieurs de ses formes de réalisation, données à titre d'exemples non limitatifs, en regard des dessins joints. Sur les dessins :
La figure 1 est une vue en perspective d'une banquette de siège automobile avec portion de coiffe amovible.
La figure 2 est une vue détail d'une place latérale de banquette arrière de siège avec sur le coté de caisse, un guide sangle traversé par un brin de sangle de ceinture provenant de l'enrouleur situé sur le coté de caisse.
La figure 3 est une vue de détail d'une place latérale d'une banquette arrière de siège muni de l'invention pour un siège en garnissage traditionnel.
La figure 4 est une vue de détail latérale d'une banquette de siège avec un garnissage comprenant une portion de coiffe amovible, le siège étant dans une position ou son dossier est rabattu contre l'assise.

Dans le contexte de la présente demande, les termes « avant », « arrière », « gauche », « droite » « supérieur », « inférieur » s'entendent en référence à un repère usuel des véhicules automobiles comprenant un premier axe longitudinal X, horizontal et orienté de l'arrière vers l'avant, un axe transversal Y et un axe vertical Z dirigé du bas vers le haut, avec un siège disposé dans le véhicule, le dossier du siège étant en position d'utilisation.

Par ailleurs, sur les différentes figures, les mêmes références désignent des éléments identiques ou similaires.

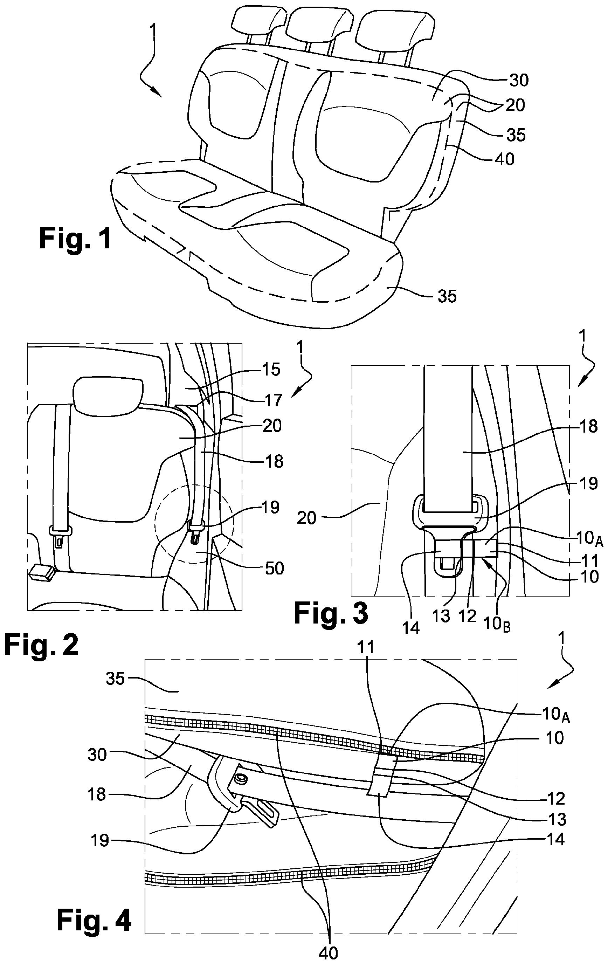

La figure 1 est une vue en perspective d'une banquette arrière 1 de siège susceptible d'appliquer l'invention. Plus en détail, la banquette de siège 1 comprend une coiffe munie d'une portion de coiffe de siège amovible 30 solidarisée par l'intermédiaire d'une fermeture à glissière 40 avec une coiffe fixe latérale 35. La coiffe amovible 30 et la coiffe fixe 35 formant la coiffe 20 de siège.

La figure 2 montre une banquette avec une coiffe 20 fixe susceptible d'appliquer l'invention. L'environnement intérieur véhicule pour les places latérales de banquette est détaillé. La sangle 18 de ceinture portant un pêne 19 de ceinture, par le passage à l'intérieur d'une fente dans la partie plastique du pêne, émane de l'enrouleur et traverse le guide sangle 17 à proximité du haut de dossier de siège. Le pêne 19 retombe ensuite latéralement sur les dormants 50 du véhicule, ce qui occasionne du bruit en cours de roulage du véhicule par le contact de la partie métallique du pêne 19 sur le dormant 50. Le contact du pêne de ceinture avec le dormant 50 est indiqué en médaillon sur la figure 2.

La figure 3 montre une vue agrandie d'une partie de banquette de siège arrière selon l'invention. La banquette de la figure 3 est une banquette avec une coiffe 20 fixe, c'est-à-dire qui n'autorise pas une déhoussabilité par l'utilisateur du véhicule La coiffe 20 recouvrant la matelassure et n'est pas retirable par l'utilisateur. La banquette arrière comprend sur la coiffe de dossier, une boucle de maintien 10 solidarisée à la coiffe 20 par couture. La boucle de maintien 10 est positionnée sur la coiffe, sur la partie latérale de coiffe. Elle est reliée par couture à la coiffe le long de la ligne de couture reliant la partie centrale de la coiffe et la partie latérale de la coiffe par une première couture 11. La boucle de maintien est composée d'une bande d'une largeur de 0,7 cm à 3 cm environ, dont les extrémités 10A et 10B sont repliées l'une sur l'autre et solidarisées l'une à l'autre afin de constituer une boucle. La couture 11 de fixation de la boucle à la coiffe est sensiblement transversale à la bande de maintien et traverse au moins les deux extrémités de bande 10A, 10B et la coiffe 20. Elle solidarise ainsi de plus les deux extrémités de bande l'une à l'autre.

Une deuxième couture 12, distincte de la première couture 11, est réalisée comme visible sur la figure 3. Elle traverse la coiffe 20 et les deux extrémités de bande 10A, 10B. Elle assure une fixation supplémentaire de la bande de maintien sur la coiffe, elle permet d'améliorer le maintien et le positionnement de la bande de maintien sur la coiffe suivant la direction transversale et suivant la hauteur. Les deux coutures, la première 11 et la deuxième 12 couture définissent un espace de bande entre la première couture et la seconde couture. Cet espace de bande permet d'améliorer le positionnement et permet de guider la position de la boucle de maintien relativement à la coiffe c'est-à-dire relativement au siège et à la ceinture de sécurité. Cet espace de bande est constitué par la superposition des deux bandes et longe la coiffe. Il permet un ancrage solide de la boucle sur la coiffe. La bande est de préférence réalisée en matériau à base d'élastomère recouvrant un insert. Cet insert peut être produit par exemple en toile tissée, ou en élément tricoté. Il assure le renforcement et la tenue de la bande. Eventuellement, de manière optionnelle, des coutures supplémentaires peuvent être envisagées sur les côtés de l'espace de bande non reliés par couture.

Une troisième couture 13 est prévue sur la bande comme visible en figure 3 et 4, cette couture s'étend transversalement à la bande et permet de délimiter et de marquer la forme de la partie fonctionnelle de la boucle de maintien, c'est-à-dire la boucle de réception 14. La boucle de maintien 10 permet l'insertion à l'intérieur de celle-ci de l'extrémité métallique du pêne 19 de ceinture de sécurité comme visible en figure 3. Cette insertion est réalisée par une manœuvre de l'utilisateur qui place la partie métallique du pêne dans la boucle. Le placement de la partie métallique du pêne 19 dans la boucle permet d'éviter les frottements du pêne de ceinture contre les ébénisteries 50 du véhicule et permet ainsi d'éviter les bruits de frottement générés par ce contact. Le placement de la partie métallique du pêne dans la boucle assure ainsi un positionnement idéal de la ceinture de sécurité 18 sur le siège, et permet d'éviter le déplacement de la ceinture vers la porte latérale du véhicule, et permet d'éviter à celle -ci d'entrer en contact avec les ébénisteries du véhicule, ce contact étant générateur de bruit potentiel.

La distance sur la bande entre la deuxième couture 12 et la troisième couture 13, permet d'ajuster le positionnement de la ceinture de sécurité par rapport au siège. La ceinture, à laquelle est reliée le pêne, vient buter contre la deuxième couture 12 de la sangle à la coiffe pour un écart entre les deux coutures 12 et 13 environ égal ou inférieur à l'écart entre le bord de la partie métallique du pêne situé à proximité de la porte latérale du véhicule et l'extrémité intérieure de la fente de passage de sangle de la partie plastique du pêne situé à proximité de la porte latérale du véhicule.

La figure 4 est une vue de détail latérale d'une banquette de siège avec un garnissage comprenant une portion de coiffe amovible 30, le siège étant dans une position ou son dossier est rabattu contre l'assise. Le pêne de ceinture est dégagé de la boucle de maintien 10. Le dégagement du pêne de la boucle est réalisé lors du mouvement de repliement du dossier sur l'assise sans l'aide extérieure de l'utilisateur, par le simple basculement du dossier. Ce dégagement se réalise ainsi de la façon suivante : le basculement du dossier entraine une légère tension de la sangle 18 vers le haut, par le déplacement du haut de dossier et le contact de celui-ci avec la sangle positionnée à l'intérieur de la boucle solidaire de la coiffe. Cette légère tension de la sangle vers le haut entraine un léger déplacement de sangle qui entraine le pêne vers le haut du dossier par l'intermédiaire d'un pion de blocage de celui-ci placé sur la sangle (visible en figure 4). Ce déplacement est suffisant pour le dégagement du pêne de la boucle de maintien 10, ce qui permet de ne pas être gêné par le pêne placé à l'intérieur de la boucle de maintien pour le repliement du dossier sur l'assise. La solution de la boucle permet ainsi une adaptation à une cinématique de siège avec dossier repliable sur l'assise.

En revanche, pour le replacement du dossier en position d'utilisation, et en l'absence d'occupant utilisant les places latérales arrières, il est nécessaire à l'utilisateur de manœuvrer pour engager la partie métallique du pêne à l'intérieur de la boucle de maintien 10.

L'invention ne se limite pas à une banquette automobile, mais concerne aussi une portion de coiffe amovible de banquette 30, munie de la boucle de maintien 10 solidarisée par couture à la portion de coiffe amovible 30.

L'invention fournit ainsi un moyen simple, efficace et peu couteux de maintien de ceinture de sécurité dans le véhicule, adapté pour coiffes traditionnelles et pour coiffes amovibles.

## Revendications

1. Banquette de siège (1) de véhicule automobile comprenant une coiffe de siège (20) recouvrant une matelassure de siège disposée sur une structure de banquette de siège automobile à laquelle la coiffe (20) de siège est maintenue, **caractérisée en ce que** la coiffe (20) comprend une boucle de maintien (10) solidarisée à la coiffe (20) par couture, ladite boucle étant destinée au maintien d'un pêne de ceinture de sécurité à l'intérieur de ladite boucle de maintien (10), afin de réduire les frottements de ce dernier avec l'environnement intérieur véhicule.

2. Banquette de siège (1) de véhicule automobile selon la revendication précédente, la coiffe (20) comprenant deux parties de coiffe, une portion latérale (35) et une portion centrale amovible (30) de coiffe réunies par une fermeture à glissière (40), **caractérisé en ce que** la portion centrale amovible (30) de coiffe comprend ladite boucle de maintien (10) solidarisée à la coiffe (20) par couture.

3. Banquette de siège (1) selon l'une quelconque des revendications précédentes, **caractérisée en ce que** ladite boucle de maintien (10) est formée par une bande repliée sur elle-même, dont les extrémités (10A, 10B) sont solidarisées à la coiffe (20) par une première couture (11) sensiblement transversale à la bande traversant au moins les deux extrémités de bande (10A, 10B) et la coiffe (20).

4. Banquette de siège (1) selon la revendication précédente, **caractérisée en ce que** ladite boucle de maintien (10) est fixée à la coiffe 20 par une deuxième couture (12), distincte de la première couture, ladite deuxième couture (12) traversant au moins les deux extrémités de bande (10A, 10B) et la coiffe (20), et définissant un espace de bande entre la première couture et la seconde couture, ledit espace de bande longeant la coiffe.

5. Banquette de siège (1) selon l'une quelconque des revendications 3 ou 4, **caractérisée en ce que** la boucle de maintien (10) comprend une couture (13) sensiblement transversale distincte traversant uniquement les deux portions de bande, ladite couture (13) étant destinée à former la boucle de réception (14) de la partie métallique du pêne.

6. Banquette de siège (1) selon l'une quelconque des revendications 3 à 5, **caractérisé en ce que** la bande formant la boucle de maintien (10) est réalisé en élastomère recouvrant un insert.

7. Véhicule comprenant une banquette (1) selon l'une quelconque des revendications précédentes, un coté de caisse (15) comprenant un enrouleur (16) de ceinture de sécurité et un guide sangle (17) à travers lequel traverse un brin (18) de sangle de la ceinture émanant de l'enrouleur (16) de la ceinture de sécurité, la ceinture comprenant un pêne de ceinture muni d'une partie métallique d'accrochage, **caractérisé en ce que** la partie métallique d'accrochage du pêne de ceinture est positionnée, au moins en partie, à l'intérieur de la boucle de maintien (10) .

8. Portion de coiffe amovible de banquette (30) destinée à une banquette de siège automobile selon l'une quelconque des revendications 1 à 6 ladite portion de coiffe amovible (30) comprenant une boucle de maintien (10) solidarisée par couture à la portion de coiffe amovible (30), la boucle de maintien étant destinée au maintien d'un pêne de ceinture de sécurité à l'intérieur de celle-ci.

## Patentansprüche

1. Sitzbank (1) eines Kraftfahrzeugs, beinhaltend einen Sitzbezug (20), der ein Sitzpolster abdeckt, das auf einer Fahrzeugsitzbankstruktur angeordnet ist, durch die der Sitzbezug (20) gehalten wird, **dadurch gekennzeichnet, dass** der Bezug (20) eine Halteschlaufe (10) beinhaltet, die per Naht fest an dem Bezug (20) angebracht ist, wobei die Schlaufe dazu bestimmt ist, eine Schlosszunge eines Sicherheitsgurts innerhalb der Halteschlaufe (10) zu halten, um ihre Reibungen an dem Innenraum des Fahrzeugs zu reduzieren.

2. Sitzbank (1) eines Kraftfahrzeugs nach dem vorhergehenden Anspruch, wobei der Bezug (20) zwei Bezugsteile beinhaltet, einen seitlichen Bezugsabschnitt (35) und einen abnehmbaren mittigen Bezugsabschnitt (30), die durch einen Reißverschluss (40) miteinander verbunden sind, **dadurch gekennzeichnet, dass** der abnehmbare mittige Bezugsabschnitt (30) die per Naht fest an dem Bezug (20) angebrachte Halteschlaufe (10) beinhaltet.

3. Sitzbank (1) nach einem der vorhergehenden Ansprüche, **dadurch gekennzeichnet, dass** die Halteschlaufe (10) durch einen auf sich zurück gefalteten Streifen gebildet ist, dessen Enden (10A, 10B) durch eine erste Naht (11), die im Wesentlichen quer zu dem Streifen verläuft und mindestens durch die zwei Streifenenden (10A, 10B) und den Bezug (20) geht, fest an dem Bezug (20) angebracht sind.

4. Sitzbank (1) nach dem vorhergehenden Anspruch, **dadurch gekennzeichnet, dass** die Halteschlaufe (10) durch eine zweite Naht (12), die sich von der ersten Naht unterscheidet, an dem Bezug 20 befestigt ist, wobei die zweite Naht (12) mindestens durch die zwei Streifenenden (10A, 10B) und den Bezug (20) geht und einen Streifenbereich zwischen der ersten Naht und der zweiten Naht definiert, wobei der Streifenbereich entlang des Bezugs verläuft.

5. Sitzbank (1) nach einem der Ansprüche 3 oder 4, **dadurch gekennzeichnet, dass** die Halteschlaufe (10) eine separate, im Wesentlichen quer verlaufende Naht (13) beinhaltet, die nur durch die zwei Streifenabschnitte geht, wobei die Naht (13) dazu bestimmt ist, die Aufnahmeschlaufe (14) für den metallischen Teil der Schlosszunge zu bilden.

6. Sitzbank (1) nach einem der Ansprüche 3 bis 5, **dadurch gekennzeichnet, dass** der Streifen, der die Halteschlaufe (10) bildet, aus Elastomer gefertigt ist, der eine Einlage abdeckt.

7. Fahrzeug, das eine Bank (1) nach einem der vorhergehenden Ansprüche beinhaltet, wobei eine Karosserieseite (15) einen Sicherheitsgurtaufroller (16) und eine Gurtführung (17), durch die ein Gurtband (18) des Gurts, der aus dem Aufroller (16) des Sicherheitsgurts austritt, verläuft, beinhaltet, wobei der Gurt eine Gurtschlosszunge, die einen metallischen Eingriffsteil aufweist, beinhaltet, **dadurch gekennzeichnet, dass** der metallische Eingriffsteil der Gurtschlosszunge zumindest teilweise im Inneren der Halteschlaufe (10) positioniert ist.

8. Abnehmbarer Bankbezugsabschnitt (30), der für eine Fahrzeugsitzbank nach einem der Ansprüche 1 bis 6 bestimmt ist, wobei der abnehmbare Bezugsabschnitt (30) eine Halteschlaufe (10) beinhaltet, die per Naht fest an dem abnehmbaren Bezugsabschnitt (30) angebracht ist, wobei die Halteschlaufe dazu bestimmt ist, eine Sicherheitsgurtschlosszunge innerhalb derselben zu halten.

## Claims

1. Motor vehicle bench seat (1) comprising a seat cover (20) covering seat padding arranged on an automobile bench seat structure on which the seat cover (20) is held, **characterized in that** the cover (20) comprises a keeper loop (10) stitched to the cover (20), said loop being designed to hold a seat belt tongue inside said keeper loop (10) with a view to reducing friction between said tongue and the interior vehicle environment.

2. Motor vehicle bench seat (1) according to the preceding claim, the cover (20) comprising two cover parts, a lateral cover portion (35) and a removable central cover portion (30) that are joined by a zip closure (40), **characterized in that** the removable central cover portion (30) comprises said keeper loop (10) stitched to the cover (20).

3. Bench seat (1) according to either of the preceding claims, **characterized in that** said keeper loop (10) is formed by a band folded onto itself, the ends (10A, 10B) of which are secured to the cover (20) by first stitching (11) substantially transverse to the band traversing at least the two band ends (10A, 10B) and the cover (20).

4. Bench seat (1) according to the preceding claim, **characterized in that** said keeper loop (10) is fixed to the cover (20) by second stitching (12), distinct from the first stitching, said second stitching (12) traversing at least the two band ends (10A, 10B) and the cover (20) and defining a band space between the first stitching and the second stitching, said band space running along the cover.

5. Bench seat (1) according to either of Claims 3 or 4, **characterized in that** the keeper loop (10) comprises distinct substantially transverse stitching (13) traversing only the two band portions, said stitching (13) being designed to form the loop (14) for receiving the metal part of the tongue.

6. Bench seat (1) according to any one of Claims 3 to 5, **characterized in that** the band forming the keeper loop (10) is produced from elastomer covering an insert.

7. Vehicle comprising a bench (1) according to any one of the preceding claims, a body side (15) comprising a seat belt retractor (16) and a strap guide (17) through which a strap strand (18) of the belt originating from the retractor (16) of the seat belt traverses, the belt comprising a belt tongue provided with a metal coupling part, **characterized in that** the metal coupling part of the belt tongue is positioned, at least in part, inside the keeper loop (10).

8. Removable bench cover portion (30) designed for an automobile bench seat according to any one of Claims 1 to 6, said removable cover portion (30) comprising a keeper loop (10) stitched to the removable cover portion (30), the keeper loop being designed to hold a seat belt tongue within it.
